# EUROPEAN PATENT APPLICATION

(11) **EP 2 837 493 A2**
(43) Date of publication of application: **18.02.2015**
(21) Application number: 14181093.7
(22) Date of filing: 14.08.2014
(51) Int. Cl.: B29K 21/00, B29C 51/34, E06B 1/70

(54) **A component for an opening in a building**

(30) Priority: 14.08.2013 GB 201314582
(71) Applicant: McGurk, John, Dungannon, Tyrone BT70 3BD (GB)
(72) Inventor: McGurk, John, Dungannon, Tyrone BT70 3BD (GB)
(74) Representative: Hanna, John Philip

(57) **Abstract**

An elongate building component for an opening in a building comprising an outer shell, the outer shell defining at least one cavity therein and at least part of the outer shell further comprising a plurality of shell layers.

## Description

The present invention relates to a component for an opening in a building and in particular to a component for an opening in a building having improved thermal and weight properties.

Most openings in buildings are provided with a sill of some sort which sits at their lower end. Such sills were traditionally formed from a cementitious material either alone or accompanied by some form of reinforcement. As a result of the materials used, traditional sills tend to be heavy and only provide a thermal efficiency equivalent to that of the cementitious material.

Solutions have been developed wherein a composite material is used for construction of a sill, and material is placed internally to improve the thermal efficiency of the component. Where a cavity is formed in the sill for the insertion of the thermally efficient material, it is difficult to form an outer sill construction having sufficient strength and weather resistance to perform the function of a traditional sill while maintaining a large enough cavity therein to improve the thermal properties. It is also advantageous that the construction of the outer sill be thermally efficient when considered alone to avoid the issue of cold bridging. Most current sill designs rely on the inherent properties of the composite material from which the sill is constructed for thermal efficiency rather than attempting to improve the thermal properties of the sill with the addition of alternative material or an altered configuration.

It is an object of the present invention to obviate or mitigate the problem of creating a composite component for an opening in a building having an outer shell and inner cavity, the outer shell being sufficiently strong, weather and contact resistant, and thermally efficient.

Accordingly, the present invention provides an elongate building component for an opening in a building comprising an outer shell, the outer shell defining at least one cavity therein and at least part of the outer shell further comprising a plurality of shell layers.

Ideally, at least one of the shell layers comprising an insulation component for increasing thermal resistance of the outer shell.

Ideally, the building component comprises an insulating core at least partially filling the at least one cavity defined by the outer shell.

Preferably, the outer shell comprises a canopy with an elongate top cover continuing into an elongate downwardly depending leading edge skirt, and lateral edge downwardly depending skirts.

Ideally, the canopy has thin walls defining an insulation receiving void when the canopy is located on a structure defining an opening.

Preferably, the thin walls of the canopy are between 5mm and 15mm thick.

Ideally, the rear end and a substantial part of the base between the lateral edge downwardly depending skirts is open creating an insulation receiving void.

Ideally, the outer shell has an open section wherein at least a portion of the at least one cavity is exposed.

Preferably, at least part of the exposed cavity portion of the building component is alignable with an exposed cavity of a cavity wall type construction of a building.

Ideally, the building component has a plurality of cavities.

Ideally, the cavities are defined by the outer shell.

Preferably, the cavities are fillable with thermally efficient material.

Ideally, the cavities are fillable with lightweight thermally efficient material.

Advantageously, the cavities formed within the outer shell allow for insertion of insulating material and/or reduction of the weight of the component. This reduction in weight of the component is a significant advantage for handling of the component which are traditionally heavy products manufactured from concrete.

Ideally, at least the portion of the building component having the elongate downwardly depending leading edge skirt overhangs the outer portion of the outer wall of the building when in use.

Preferably, at least one of the cavities formed by the outer shell is locatable in the portion of the building component proximal the elongate downwardly depending leading edge skirt.

Ideally, the cavity proximal the elongate downwardly depending leading edge is enclosed within the body of the building component.

Preferably the outer shell comprises a filler layer of composite material.

Ideally, the layer of composite material acts as a thermal resistance barrier.

Ideally, the filler layer of the composite material comprises a composite aggregate material.

Preferably, the filler layer of the composite material comprises a polymer mortar material.

Ideally, the polymer mortar comprises a polymeric admixture and an aggregate material.

Preferably, the aggregate material comprises any one of or any combination of sand, chalk or wood or indeed any other material which is capable of flowing when mixed with a resin.

Preferably, the polymeric admixture comprises any one of latexes or emulsions, redispensible polymer powders, water soluble polymers, liquid resins and monomers.

Ideally, the outer shell comprises a second layer layered on one side of the filler layer.

Preferably, the second layer comprises a structural layer component.

Ideally, the outer shell comprises a third layer layered on the other side of the filler layer sandwiching the filler layer between the second and third layers.

Preferably, the third layer is a structural layer.

Ideally, a further protective/finishing layer component is provided on the outside surface of the structural layer component.

Ideally, the structural layer component is a composite component.

Preferably, the structural layer component is composed of a fiberglass composite material.

Ideally, the structural layer component is provided by fiber-reinforced polymers, FRPs, carbon-fiber reinforced plastic CFRP or glass-reinforced plastic GRP.

Preferably, the matrix is provided by a thermoplastic composite.

Ideally, the thermoplastic composite is a short fiber thermoplastic, a long fiber thermoplastics or a long fiber-reinforced thermoplastic.

Alternatively, the matrix is provided by a thermoset composite.

Ideally, the structural layer component is provided by aramid fibre and carbon fibre in an epoxy resin matrix.

Preferably, the FRPs include wood comprising cellulose fibers in a lignin and hemicellulose matrix.

Ideally, the structural layer component is composed of composite fiberglass chop strand matt.

Preferably, the structural layer component is locatable between the polymer mortar layer and the protective/finishing layer component.

Preferably, the protective/finishing layer component is comprised of a material capable of protecting the structural layer component and the polymer mortar layer from weather based and other such deterioration.

Ideally, the protective/finishing layer component is comprised of a material capable of providing an attractive finished surface to the component for the opening in a building.

Ideally, the protective/finishing layer component is a polyester gel coating.

Preferably, the protective/finishing layer component is applyable to/locatable on the outer surface of the outer shell.

Ideally, the building component has a prevention means for preventing water travelling from the underside of the front end of the building component towards the wall of the building.

Preferably, the prevention means is a drip channel extending along the underside of the front end of the building component, longitudinally along the length of the building component.

Ideally, the building component has an underside surface which is contactable with a surface defining the lower boundary of the opening in the building.

Preferably, the underside surface of the building component generally faces the ground during use.

Ideally, part of the underside surface is a continuation of the downwardly depending leading edge skirt cranked backwards towards the rear of the building component.

Preferably, the prevention means is a channel formed in the underside surface of the building component.

Ideally, the channel is formed on the portion of the underside of the building component which projects from the building when the building component is in use.

Advantageously, the channel causes a break in the path of water attempting to travel along the underside surface of the building component towards the building, causing the water to drip from the underside of the building component rather than travel towards the building.

Preferably, the top cover of the building component provides an upper surface.

Ideally, the building component comprises a plurality of levels on its upper surface.

Preferably, the building component has a back end distal the end of the building component having the elongate downwardly depending leading edge skirt.

Ideally, the back end is locatable at or near a window, door, or other such building feature.

Preferably, the levels are inclined in a direction from the back end of the building component to the end of the building component having the elongate downwardly depending leading edge skirt.

Preferably, at least one of the levels is an upper level being locatable at or about the base of a window, door, or other such feature of a building locatable above the building component.

Preferably, the upper level has a transition portion which connects the upper level to the level there below.

Preferably, the transition portion is inclined at a steeper angle than the levels there between.

Advantageously, water which has fallen on the upper level is encouraged to run from the upper level, down the transition portion to the level there below and onwards from there towards and off the end of the building component having the elongate downwardly depending leading edge skirt.

Ideally, the building component has a rough surface on at least a portion of its underside.

Advantageously, the rough surface aids the building component to adhere to the mortar or other such adhesive means used to install the building component into the building.

Ideally, the opening in the building is a window opening.

Alternatively, the opening in a building is a doorway.

Further alternatively, the opening in a building is any opening wherein any surface defining the opening is capable of receiving a building component such as a sill or lintel.

Ideally, the building component is a sill.

Preferably, at least one of the cavities is enclosed within the shell.

Ideally, the enclosed cavity is filled or partly filled with insulation.

A method of manufacturing a building component comprising the steps of:
applying a structural support layer onto a mould for an elongate building component;
applying a filler layer onto the structural support layer on the mould;
applying an insulation core material onto at least part of the filler layer on the mould;
filing any remaining gaps in the mould with the filler layer; and
heating the layered material for a predetermined period of time to cure the layered material into a solid building component.

Ideally, the structural support layer may be applied onto the surface of the mould manually, by powered pump and delivery means or drawn via delivery means under vacuum.

Preferably, the filler layer may be applied into the mould manually, by powered pump and delivery means or drawn via delivery means under vacuum.

Ideally, the insulation means may be applied into the mould manually, by powered pump and delivery means or drawn via delivery means under vacuum.

Ideally, the method further comprising the steps of:
applying a structural support layer on a building component forming outside surface of a female mould part.

Preferably, the method further comprising applying a structural support layer on a building component forming inside surface of a male mould part.

Ideally, the method further comprising applying a structural support layer on a building component forming underside surface of a lid mould part.

Preferably, the method further comprising applying a filler layer on the structural support layer on the female mould part.

Ideally, the method further comprising moving the male mould part into the female mould part for forming a part of the outer shell of the building component defining a cavity.

Ideally, the method further comprising placing an insulation core material onto the filler layer on the female mould part into a gap defined between longitudinal portions of the male and female mould parts partially filling the gap.

Ideally, the method further comprising filing the remaining gaps in the mould between the longitudinal portions and the lateral portions of the male and female mould parts with the filler layer.

Ideally, the method further comprising closing the lid; and
heating the layered material for a predetermined period of time to cure the layered material into a solid building component.

Ideally, the method further comprising applying a protective coating layer to the mould as an initial step.

Preferably, the method comprising applying a protective coating layer to the outside surface of the building component after the forming process.

Preferably, the method comprising applying the coating layer to the same portion of the mould parts prior to applying the structural support layer.

Ideally, the method comprising applying a layer of glass fiber sheet onto the relevant parts of the mould and applying a resin onto the glass fibre sheet for forming a GRP layer.

Preferably, the method comprising mixing an aggregate material and a resin for forming a polymer mortar and applying the polymer mortar onto the GRP layer of the mould.

Ideally, the method comprises inserting insulation into the polymer mortar and at least partly enclosing the insulation with a further layer of polymer mortar.

Preferably, the method further comprises applying a catalyst to the resin of the polymer mortar and/or the resin of the structural support layer and/or the resin of the protective layer. Advantageously, the catalyst initiates the chemical reactions to bind the resins together during the curing process.

Ideally, the catalyst is mixed thoroughly into the resin.

Preferably, the method further comprising using an accelerator compound. Advantageously, the accelerator promotes faster reaction time of the resin to the catalyst increasing the cure rate of the component.

Ideally, the method comprising curing the building component materials for a period of 2-4 hours depending on the volume of material or length of the building component.

Accordingly, the present invention provides a window sill for an opening in a building comprising an outer shell, the outer shell defining at least one cavity therein and at least part of the outer shell of the window sill comprising of a fibre reinforced polymer, most preferably glass reinforced plastic.

Accordingly, the present invention provides an insulation plug formed for insertion into the cavity at the rear of the building component/window sill as described above.

The invention will now be described with reference to the accompanying drawings which show by way of example only one embodiment of an apparatus in accordance with the invention. In the drawings:

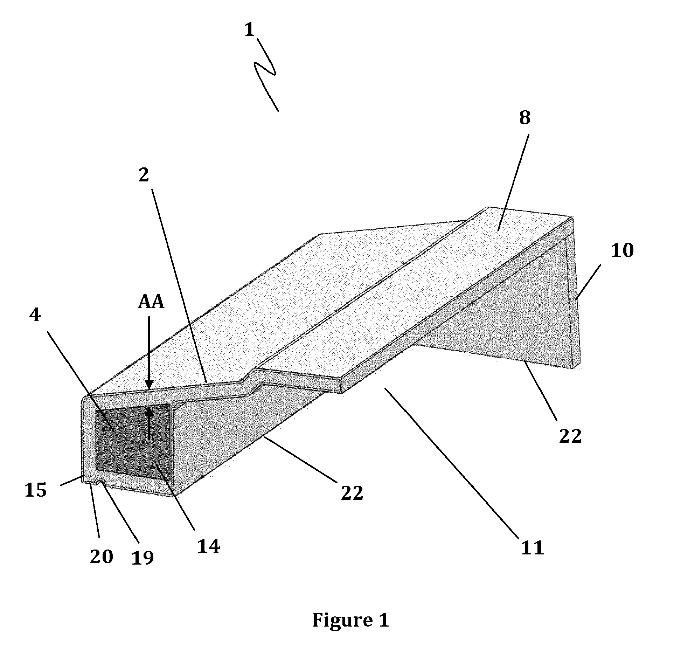

Figure 1 is a partial perspective view of the building component having a lateral cross-sectional cut through;

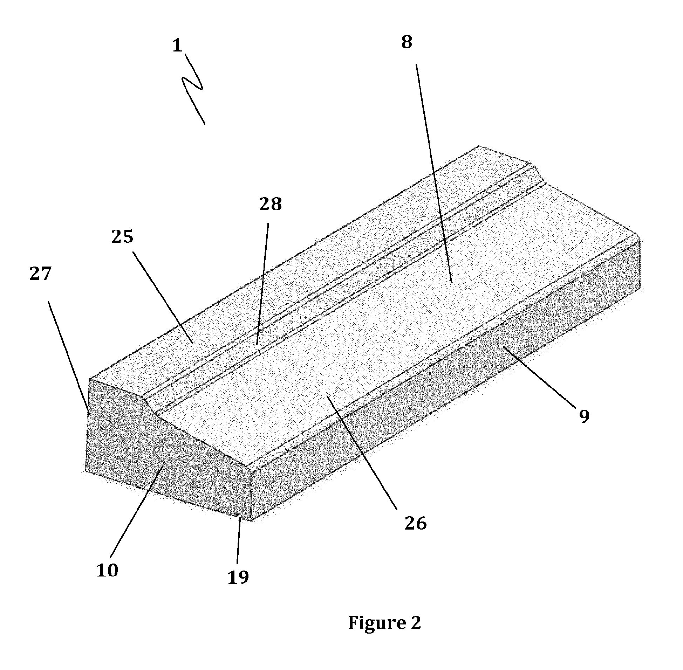

Figure 2 is a full perspective view of the building component from a front aspect;

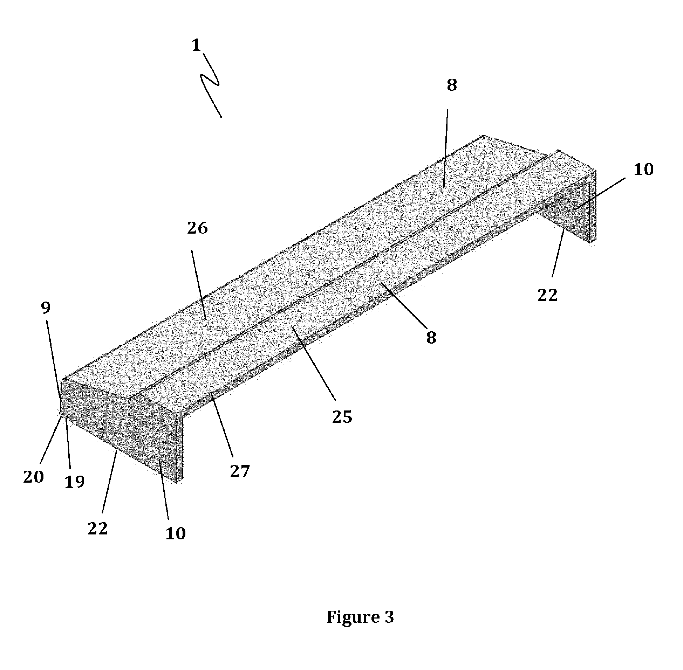

Figure 3 is a full perspective view of the building component from a rear aspect;

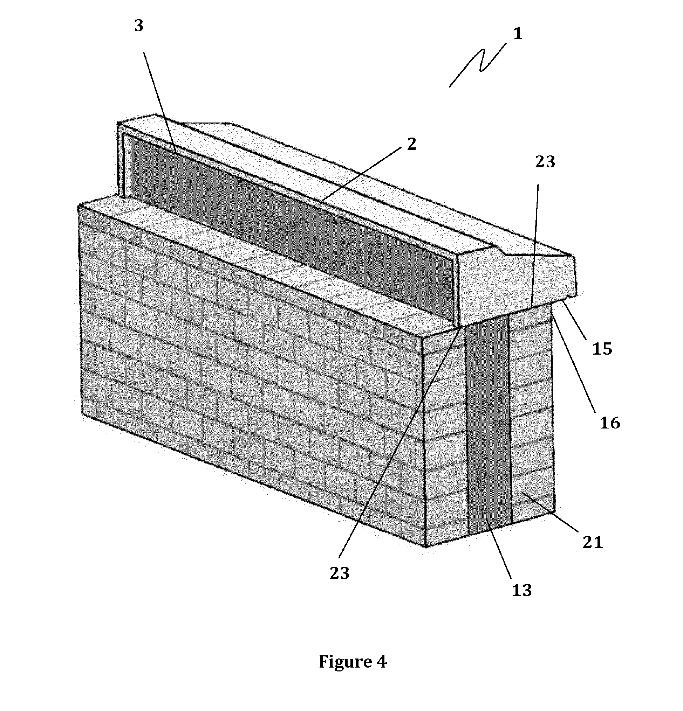

Figure 4 is a perspective view of the building component in situ on part of a cavity wall building structure; and

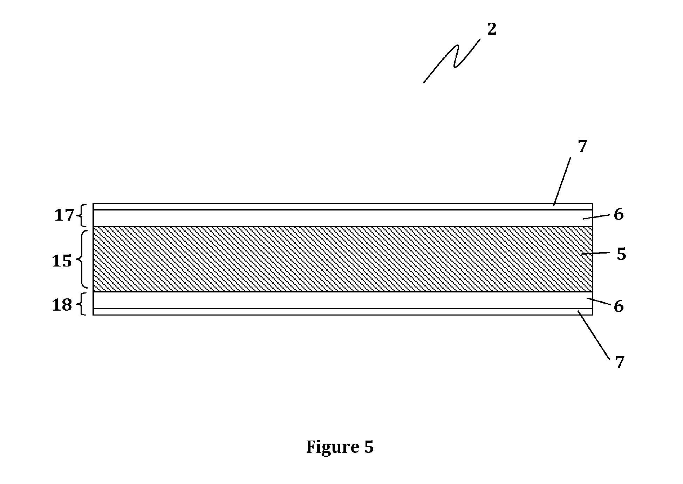

Figure 5 is a view through section AA of figure 1 and shows the layers of the outer shell.

In the drawing, there is shown a sill for an opening in a building indicated generally by the reference numeral 1 comprising an outer shell 2, the outer shell 2 defining two cavities 3, 4. The outer shell further comprises five shell layers 5, 6, 7.

The outer shell 2 forms a canopy with an elongate top cover 8 continuing into an elongate downwardly depending leading edge skirt 9, and lateral edge downwardly depending skirts 10. The outer shell 2 also has an open section 11 exposing at least a portion of the cavity 3. A second cavity 4 is also defined by the outer shell 2 and filled with lightweight thermally efficient material 14. The front portion 15 of the sill 1 overhangs the outer portion 16 of the outer wall of the building when in use and the second cavity 4 is located in this front portion 15. The reduction in weight provided by the cavities 3, 4 is a significant advantage for handling of window sill components which are traditionally heavy products manufactured from concrete.

The outer shell 2 comprises a filler layer 5 having high thermal resistance, made from a polymer mortar material. The outer shell also has second and third layers, 17, 18 between which the filler layer 5 is sandwiched. The second and third layers 17, 18 each comprise a structural layer component 6 and a protective/finishing layer component 7. The structural layer component 6 is composed of a composite fiberglass chop strand matt and is locatable between the filler insulating layer 5 and the protective/finishing layer component 7. The protective/finishing layer component 7 is a polyester gel coating.

The sill 1 has a channel 19 for preventing water travelling from the underside 20 of the front end 15 of the sill 1 towards the wall of the building 21. The channel 19 extends along the underside 20 of the front end of the sill 1. The channel causes a break in the path of water attempting to travel along the underside 20 of the sill 1 towards the building, causing the water to drip from the underside 20 of the sill 1 rather than travel towards the building.

The sill 1 has an underside surface 22 which is contactable with a surface 23 defining the lower boundary of the window opening in the building. The underside surface 22 of the sill 1 generally faces the ground during use and at least part of the underside surface 22 is a continuation of the downwardly depending leading edge skirt 9 cranked backwards towards the rear of the sill 1. The sill 1 underside surface 22 is a rough surface which aids the sill 1 to adhere to the mortar or other such adhesive used to install the sill 1 into the building.

The top cover 8 of the sill 1 provides an upper surface 24 having two levels 25, 26. The building component has a back end 27 distal the front end 15, the back end 27 being located at or near a window. The levels 25, 26 are inclined in a direction from the back end 27 of the sill 1 to the front end 15 of the sill 1. An upper level 25 is locatable at or about the base of a window and has a transition portion 28 which connects the upper level 25 to the level therebelow 26. The transition portion 28 is inclined at a steeper angle than the levels therebetween 25, 26 and, as a result, water which has fallen on the upper level 25 is encouraged to run from the upper level 25, down the transition portion 28 to the level therebelow 26 and onwards from there towards and off the elongate downwardly depending leading edge skirt 9.

The building component as shown in the drawings is manufactured via a process comprising the steps of applying a structural support layer 6 on a building component forming outside surface of a female mould part and applying a similar structural support layer 6 on a building component forming inside surface of a male mould part, and on a building component forming underside surface of a lid mould part. A filler layer 5 is then applied on the structural support layer on the female mould part and the male mould part is moved into the female mould part for forming a part of the outer shell 2 of the building component 1 defining a cavity 11.

Insulation core material is placed onto the filler layer 5 on the female mould part into a gap defined between longitudinal portions of the male and female mould parts partially filling the gap. The remaining gaps in the mould between the longitudinal portions and the lateral portions of the male and female mould parts are filled with the filler layer 5.

A structural support layer 6 is then applied to a building component forming base layer of a lid mould part and the lid is closed before heating the layered material for a predetermined period of time to cure the layered material into a solid building component. Generally, the period of time required for curing is 2-4 hours, depending on the volume of material or length of the building component.

The manufacture further comprises applying a coating layer 7 to the outside surface of the building component by applying the coating layer 7 to the same portion of the mould parts prior to applying the structural support layer 6.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof as defined in the appended claims.

## Claims

1. An elongate building component for an opening in a building comprising an outer shell, the outer shell defining at least one cavity therein and at least part of the outer shell further comprising a plurality of shell layers.

2. An elongate building component as claimed in claim 1, wherein at least one of the shell layers comprising an insulation component for increasing thermal resistance of the outer shell.

3. An elongate building component as claimed in claim 1 or claim 2, wherein the building component comprises an insulating core at least partially filling the at least one cavity defined by the outer shell.

4. An elongate building component as claimed in any one of the preceding claims,
wherein the outer shell comprises a canopy with an elongate top cover continuing into an elongate downwardly depending leading edge skirt, and lateral edge downwardly depending skirts.

5. An elongate building component as claimed in claim 4, wherein at least one cavity formed by the outer shell is locatable in the portion of the building component proximal the elongate downwardly depending leading edge skirt, the cavity proximal the elongate downwardly depending leading edge being enclosed within the outer shell of the building component.

6. An elongate building component as claimed in any one of the preceding claims,
wherein the outer shell comprises a filler layer of composite material.

7. An elongate building component as claimed in claim 6, wherein the filler layer of the composite material comprises a polymer mortar material.

8. An elongate building component as claimed in claim 6 or claim 7, wherein the outer shell comprises a second layer layered on one side of the filler layer.

9. An elongate building component as claimed in claim 8, wherein the outer shell comprises a third layer layered on the other side of the filler layer sandwiching the filler layer between the second and third layers.

10. An elongate building component as claimed in claim 8 or claim 9, wherein the second and/or third layer is a structural layer.

11. An elongate building component as claimed in claim 10, wherein the structural layer is provided by fiber-reinforced polymers, FRPs, carbon-fiber reinforced plastic CFRP or glass-reinforced plastic GRP.

12. An elongate building component as claimed in any one of the preceding claims,
wherein a further protective/finishing layer component is provided on the outside surface of the outer shell.

13. A method of manufacturing a building component comprising the steps of:
applying a structural support layer onto a mould for an elongate building component;
applying a filler layer onto the structural support layer on the mould;
applying an insulation core material onto at least part of the filler layer on the mould;
filing any remaining gaps in the mould with the filler layer; and
heating the layered material for a predetermined period of time to cure the layered material into a solid building component.

14. A method as claimed in claim 13, wherein the method further comprising the steps of:
applying a structural support layer on a building component forming outside surface of a female mould part, applying a structural support layer on a building component forming inside surface of a male mould part, applying a structural support layer on a building component forming underside surface of a lid mould part, applying a filler layer on the structural support layer on the female mould part, moving the male mould part into the female mould part for forming a part of the outer shell of the building component defining a cavity, placing an insulation core material onto the filler layer on the female mould part into a gap defined between longitudinal portions of the male and female mould parts partially filling the gap, filing the remaining gaps in the mould between the longitudinal portions and the lateral portions of the male and female mould parts with the filler layer, closing the lid; and heating the layered material for a predetermined period of time to cure the layered material into a solid building component.

15. A window sill for an opening in a building comprising an outer shell, the outer shell defining at least one cavity therein and at least part of the outer shell of the window sill comprising of a fibre reinforced polymer, most preferably glass reinforced plastic.
